# EUROPEAN PATENT APPLICATION

(11) **EP 3 819 914 A1**
(43) Date of publication of application: **12.05.2021**
(21) Application number: 18922092.4
(22) Date of filing: 13.09.2018
(51) Int. Cl.: G21C 3/04, H05B 3/08

(54) **BUS ARRANGEMENT FOR A TUBULAR ELECTRIC HEATING ELEMENT ASSEMBLY**

(30) Priority: 06.07.2018 RU 2018124791
(71) Applicant: Joint Stock Company "Experimental And Design Organisation "Gidropress" Awarded The Order of The Red Banner of Labour And Czsr Order of Labour, Podolsk, Moskovskaya obl. 142103 (RU)
(72) Inventor: GAVRILIN, Viktor Alekseevich, 142100, Podolsk (RU)
(74) Representative: Friese Goeden Patentanwälte PartGmbB
(86) International application number: PCT/RU2018/000604
(87) International publication number: WO 2020/009602

(57) **Abstract**

THE INVENTION RELATES TO NUCLEAR POWER, IN PARTICULAR TO ELECTRIC HEATERS IN THE SAFETY SYSTEMS OF NUCLEAR REACTORS OF NUCLEAR POWER PLANTS.

THE OBJECT OF THE INVENTION IS TO IMPROVE THE RELIABILITY OF BTEN IN OPERATION AT NUCLEAR POWER PLANTS.

THE TECHNICAL RESULT OF THE PRESENT INVENTION IS TO PROVIDE A DEVICE THAT PROVIDES EASE OF ASSEMBLING AND OPERATION OF BTAN, REDUCING INSTALLATION TIME AND DOSSTART STAFF, TO INCREASE THE THERMAL STABILITY OF THE NODE LIKOPODIJA OF PETN.

THE TECHNICAL RESULT IS ACHIEVED IN THAT THE BUSBAR UNIT IS TUBULAR, CONTAINING A BLOCK OF TUBULAR HEATERS, SEALED TERMINAL BOX, THE CONNECTION NODES OF THE POWER WIRES TO THE OUTPUT TUBULAR HEATERS, WHICH ARE COMBINED IN GROUPS, THE NODE CONNECTING THE WIRE SUPPLY TO THE OUTPUT TUBULAR HEATERS MADE IN THE FORM OF A HEAT-RESISTANT SEALED PLUG BAYONET CONNECTOR, PLUG WHICH IS THE OUTPUT TUBULAR HEATERS, PINS BAYONET CONNECTIONS ARE MADE ON THE BODY OF THE TUBULAR ELECTRIC HEATER, AND THE GROOVES OF THE BAYONET CONNECTION ARE MADE IN THE FORM OF AN INCLINED PROFILE SURFACE. ALTERNATIVELY, THE BAYONET JOINT IS MADE IN THE FORM OF AN ASYMMETRICAL TOOTHED NOTCH. AS AN OPTION, HEAT-RESISTANT HERMETIC PLUG CONNECTORS OF DIFFERENT LENGTHS ARE USED IN THE BLOCK OF TUBULAR ELECTRIC HEATERS.

## Description

THE INVENTION RELATES TO NUCLEAR POWER, IN PARTICULAR TO ELECTRIC HEATERS IN THE SAFETY SYSTEMS OF NUCLEAR REACTORS OF NUCLEAR POWER PLANTS. THE BUSHING OF THE ELECTRIC HEATER OF THE NPP REACTOR PLANT EQUIPMENT IS DESIGNED TO ENSURE THE TRANSFER OF ELECTRIC ENERGY RECEIVED FROM THE POWER BOARDS OF THE POWER SUPPLY SYSTEM TO THE ELECTRIC HEATERS OF THE REACTOR PLANT EQUIPMENT. THE BUSBAR INCLUDES AN ELECTRIC HEATER, ELECTRIC HEAT-RESISTANT COMMUNICATION LINES, CURRENT SUPPLY CONNECTION NODES, TERMINAL BOX.

KNOWN USED AT THE NPP OSHINOVKA, WHICH USED A BLOCK OF TUBULAR ELECTRIC HEATERS (HEREINAFTER BTEN) " BLOCK TUBULAR ELECTRIC HEATERS "(RF PATENT No. 50639 F24H, G21C, PRIORITY 25.02.2005). THIS BTEN INCLUDES HEATING ELEMENTS, A FLANGE WITH THREADED HOLES, A PROTECTIVE CASING, WHICH IS FIXED TO THE FLANGE BY MEANS OF FASTENERS SCREWED INTO THE THREADED HOLES OF THE ABOVE-MENTIONED FLANGE. DISADVANTAGES OF THE DEVICE ARE:
- PRESENCE OF BOLTED CONNECTION IN THE CURRENT SUPPLY OF TEN;
- COMPLEXITY OF ACCESS TO CONTACTS OF TEN AT ELECTRICAL INSTALLATION.

THE CLOSEST IN TECHNICAL ESSENCE IS THE DEVICE "BUSHING UNIT TUBULAR ELECTRIC HEATERS" (RF PATENT FOR UTILITY MODEL NUMBER 61937, IPC H01F 6/00 (2006.01), PRIORITY 22.06.2006), IN WHICH THE ELECTRICAL HEAT-RESISTANT COMMUNICATION LINES BETWEEN GROUPS OF ELECTRIC HEATERS AND A SEALED TERMINAL BOX MADE ONE THERMORADIATION-RESISTANT CABLE, THE BUS IS RIGIDLY CONNECTED TO THE NODES CONNECTING WIRES, SEPARATORS SEALED TERMINAL BOX CONNECTED TO INSULATORS, IN ADDITION, THE BODY OF THE SEALED TERMINAL BOX IS MADE OF THIN SHEET STAINLESS STEEL, MOREOVER, A DIFFERENTIAL PRESSURE COMPENSATOR IS INSTALLED IN THE HOUSING OF THE SEALED TERMINAL BOX. THE TECHNICAL DECISION WAS MADE FOR THE PROTOTYPE.

THE DISADVANTAGES OF THE KNOWN DEVICE, TAKEN AS A PROTOTYPE, ARE:
- THE PRESENCE OF A BOLTED CONNECTION IN THE NODE OF THE CURRENT SUPPLY OF TEN;
- COMPLEXITY OF INSTALLATION (DISMANTLING), PERFORMANCE OF CONTROL OF ELECTRIC PARAMETERS OF TEN;
- INSUFFICIENT HEAT RESISTANCE OF THE HEATING ELEMENT CURRENT SUPPLY UNIT DURING OPERATION.

THE OBJECT OF THE INVENTION IS TO IMPROVE THE RELIABILITY OF BTEN IN OPERATION AT NUCLEAR POWER PLANTS.

THE TECHNICAL RESULT OF THE PRESENT INVENTION IS TO PROVIDE A DEVICE THAT PROVIDES EASE OF ASSEMBLING AND OPERATION OF BTAN, REDUCING INSTALLATION TIME AND DOSSTART STAFF, TO INCREASE THE THERMAL STABILITY OF THE NODE LIKOPODIJA OF PETN .

THE TECHNICAL RESULT IS ACHIEVED IN THAT THE BUSBAR UNIT IS TUBULAR, CONTAINING A BLOCK OF TUBULAR HEATERS, SEALED TERMINAL BOX, THE CONNECTION NODES OF THE POWER WIRES TO THE OUTPUT TUBULAR HEATERS, WHICH ARE COMBINED IN GROUPS, THE NODE CONNECTING THE WIRE SUPPLY TO THE OUTPUT TUBULAR HEATERS MADE IN THE FORM OF A HEAT-RESISTANT SEALED PLUG BAYONET CONNECTOR, PLUG WHICH IS THE OUTPUT TUBULAR HEATERS, PINS BAYONET CONNECTIONS ARE MADE ON THE BODY OF THE TUBULAR ELECTRIC HEATER, AND THE GROOVES OF THE BAYONET CONNECTION ARE MADE IN THE FORM OF AN INCLINED PROFILE SURFACE. ALTERNATIVELY, THE BAYONET JOINT IS MADE IN THE FORM OF AN ASYMMETRICAL TOOTHED NOTCH. AS AN OPTION, HEAT-RESISTANT HERMETIC PLUG CONNECTORS OF DIFFERENT LENGTHS ARE USED IN THE BLOCK OF TUBULAR ELECTRIC HEATERS.

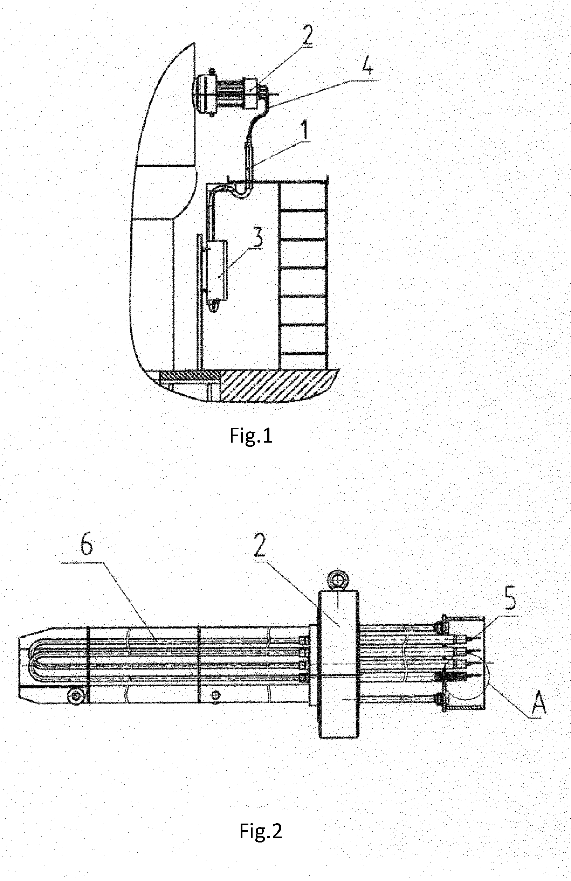

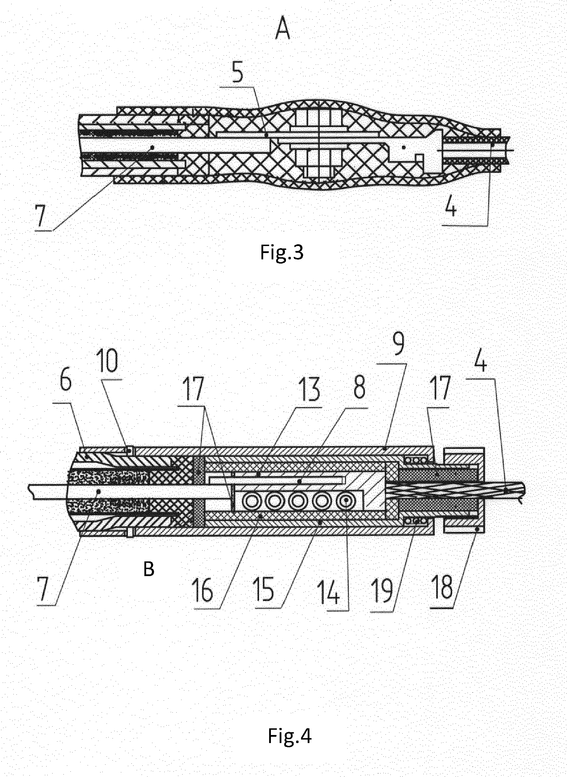

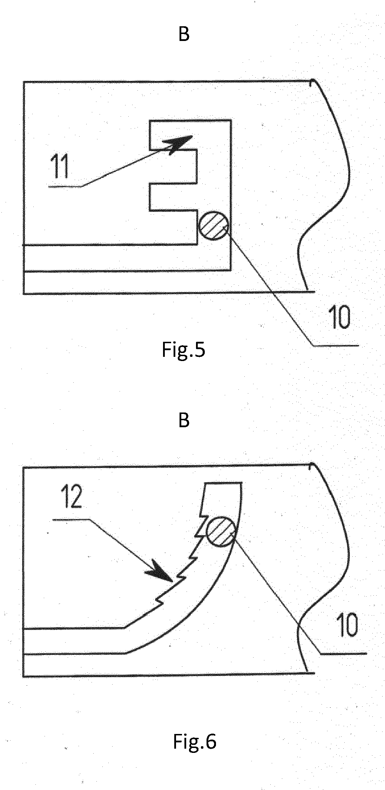

THE ESSENCE OF THE INVENTION IS EXPLAINED BY DRAWINGS. IN FIG.1 SHOWS A GENERAL VIEW OF THE BUSHING UNIT TUBULAR ELECTRIC HEATERS. IN FIG.2 SHOWS A BLOCK OF TUBULAR ELECTRIC HEATERS. IN FIG.3 SHOWS THE CURRENT SUPPLY UNIT OF THE EXISTING BTEN (PROTOTYPE). IN FIG.4 THE TEN PLUG CONNECTOR IS PICTURED. IN FIG.5 SHOWS THE SHAPE OF THE BAYONET CONNECTOR GROOVE. IN FIG.6 SHOWS THE SHAPE OF THE ASYMMETRIC SERRATED NOTCH SURFACE OF THE BAYONET CONNECTOR GROOVE.

BUSBAR BLOCK TUBULAR 1 COMPRISES A TUBULAR BLOCK 2, SEALED TERMINAL BOX 3, THE CONNECTION NODES OF THE POWER WIRES 4 TO TERMINAL 5 TUBULAR 6. THE TERMINAL 5 OF THE TUBULAR ELECTRIC HEATERS 6 COMPRISES A ROD 7 AND A CONTACT PLATE 8. FOR CONNECTING POWER WIRE 4 TO TERMINAL 5 6 TUBULAR HEAT-RESISTANT HERMETIC BAYONET CONNECTOR PLUG 9, WHICH PLUG IS A CONTACT PLATE 8 OF THE TUBULAR ELECTRIC HEATER 6. THE PINS 10 OF THE BAYONET CONNECTION ARE MADE ON THE BODY OF THE TUBULAR ELECTRIC HEATER 6, THE GROOVES 11 OF THE BAYONET CONNECTION ARE MADE IN THE BODY OF THE BAYONET CONNECTOR 9. ALTERNATIVELY, THE GROOVES ARE MADE IN THE FORM OF AN INCLINED PROFILE SURFACE WITH AN ASYMMETRIC TOOTHED NOTCH 12. AS AN OPTION, HEAT-RESISTANT SEALED PLUG CONNECTORS 9 ARE MADE OF DIFFERENT LENGTHS (DIFFERENT LENGTHS IN GROUPS OF TUBULAR ELECTRIC HEATERS 6). SOCKET 13 BY A BAYONET CONNECTOR 9 HAS A SPRING ASSEMBLY URGING THE CONTACTS 14. THE SOCKET 13 OF THE BAYONET CONNECTOR 9 IS INSULATED FROM THE INNER HOUSING 15 OF THE BAYONET CONNECTOR 9 BY A HEAT-RESISTANT CERAMIC INSERT 16. TO ENSURE THE SEALING OF THE NODE CONNECTING THE POWER WIRES 4 TO THE TERMINAL 5 OF THE TUBULAR ELECTRIC HEATERS 6, HEAT-RESISTANT GASKETS 17 ARE APPLIED, AND A CAP NUT 18 IS USED TO SEAL THE POWER WIRES 4. TO ENSURE THE FIXATION OF THE PLUG CONNECTOR 9 ON THE TUBULAR ELECTRIC HEATER 6, A SPRING 19 IS APPLIED. THE LENGTH OF THE BAYONET PORTION OF THE PLUG CONNECTOR 9 SHOULD BE SUFFICIENT TO TRANSFER THE BULK OF THE WEIGHT OF THE PLUG CONNECTOR 9 TO THE BODY OF THE TUBULAR ELECTRIC HEATER 6 AND REMOVE UNWANTED MECHANICAL LOADS ON THE PLUG 8 - SOCKET CONNECTION 13.

FOR THE MANUFACTURE OF THIS DEVICE, THE FOLLOWING HEAT-RESISTANT MATERIALS CAN BE USED: FOR THE HOUSING OF THE PLUG CONNECTOR 9, 15-STEEL 08X18N10T, FOR INSULATORS 16-CERAMICS MADE OF ALUMINUM OXIDE, FOR CURRENT SUPPLY ELEMENTS 13-NICKEL, FOR POWER WIRES 4-THERMORADIATION RESISTANT CABLE, FOR GASKETS 17-ELASTOMER MADE OF THERMORADIATION RESISTANT RUBBER IRP 1338.

THE USE OF THE PRODUCT IS AS FOLLOWS. WHEN INSTALLING THE PLUG CONNECTOR 9 ON A TUBULAR ELECTRIC HEATER 6, AN ELECTRICAL CONNECTION IS MADE BETWEEN THE PLUG AND SOCKET 8, 13. AXIAL MOVEMENT OF THE PLUG 9, BY THE MOVEMENT OF THE PINS 10 ON THE INCLINED PROFILED GROOVE SURFACE 11 IS PROVIDED BY A SNAP-ACTION ELECTRICAL CONTACT AND SIMULTANEOUSLY A SEALING JUNCTION WITH THE TUBULAR HEATER 6 DUE TO THE ELASTICITY OF THE GASKET 17 AND THE SPRINGS 19. WHEN USING THE TOOTHED NOTCH 12, THE PLUG CONNECTOR 9 IS FIXED TO THE TUBULAR ELECTRIC HEATER 6 IN ANY INTERMEDIATE POSITION. THE VALUE OF THE TOOTHED NOTCH 12 IS SELECTED IN SUCH A WAY THAT ON THE ONE HAND TO ENSURE THE FIXATION OF THE CAM 10 IN INTERMEDIATE POSITIONS, AND ON THE OTHER QUITE EASY MOVEMENT OF THE CAM 10 ALONG THE GROOVE 11 AND ITS DISENGAGEMENT WITH THE TOOTHED NOTCH 12.

DISMANTLING OF THE PLUG CONNECTOR 7 IS PERFORMED AS FOLLOWS. THE PLUG CONNECTOR 7 MOVES FORWARD, DUE TO THE ELASTICITY OF THE SPRING 19, ITS AXIAL MOVEMENT OCCURS AND THE CAM 10 DISENGAGES FROM THE GEAR NOTCH 12. WHEN THE PLUG CONNECTOR 9 IS TURNED BACK, IT IS DISCONNECTED.

TO FACILITATE THE INSTALLATION OF PLUG CONNECTORS 7 ON THE BLOCK OF TUBULAR ELECTRIC HEATERS 2, PLUG CONNECTORS OF DIFFERENT LENGTHS ARE USED. ALTERNATIVELY, THE LENGTH OF THE PLUG CONNECTORS 7 IS DIVIDED INTO GROUPS OF TUBULAR ELECTRIC HEATERS.

THUS, THE USE OF THE PROPOSED TECHNICAL SOLUTIONS IN COMPARISON WITH KNOWN DEVICES, IMPROVES THE RELIABILITY AND BTEN IN THE PROCESS OF MAINTENANCE AT NUCLEAR POWER PLANTS: REDUCES THE TIME AND SIMPLIFIES WIRING BY A HEATER, INCREASES THE TEMPERATURE RESISTANCE OF THE PRODUCT, REDUCED DOSSETTI PERSONNEL IN THE OPERATION OF THE DEVICE.

## Claims

1. BUSBAR BLOCK OF TUBULAR HEATERS CONTAINING BLOCK OF TUBULAR HEATERS, SEALED TERMINAL BOX, THE CONNECTION NODES OF THE POWER WIRES TO THE OUTPUT TUBULAR HEATERS, WHICH ARE COMBINED INTO GROUPS, **CHARACTERIZED IN THAT** THE NODE CONNECTING THE WIRE SUPPLY TO THE OUTPUT TUBULAR HEATERS MADE IN THE FORM OF A HEAT-RESISTANT SEALED PLUG BAYONET CONNECTOR, PLUG WHICH IS THE OUTPUT TUBULAR HEATERS, PINS BAYONET CONNECTIONS ARE MADE ON THE BODY OF THE TUBULAR ELECTRIC HEATER, THE GROOVES OF THE BAYONET CONNECTION ARE MADE IN THE FORM OF AN INCLINED PROFILE SURFACE.

2. BUSHING UNIT TUBULAR ELECTRIC HEATERS ACCORDING TO CLAIM 1, **CHARACTERIZED IN THAT** THE BAYONET CONNECTION IS MADE IN THE FORM OF AN ASYMMETRIC TOOTHED NOTCH.

3. BUSHING UNIT TUBULAR ELECTRIC HEATERS ACCORDING TO CLAIM 1, **CHARACTERIZED IN THAT** THE BLOCK TUBULAR ELECTRIC HEATERS USED HEAT-RESISTANT SEALED PLUG CONNECTORS OF DIFFERENT LENGTHS.

4. BUSHING UNIT TUBULAR ELECTRIC HEATERS ACCORDING TO CLAIM 1, **CHARACTERIZED IN THAT** THE BLOCK TUBULAR ELECTRIC HEATERS USED HEAT-RESISTANT SEALED PLUG CONNECTORS OF DIFFERENT GROUPS OF TUBULAR ELECTRIC HEATERS LENGTH.
